Europäisches Patentamt

European Patent Office

Office européen des brevets

(11) Publication number: **0 062 867**
**B1**

(12) **EUROPEAN PATENT SPECIFICATION**

(45) Date of publication of patent specification: **21.10.87**

(51) Int. Cl.⁴: **B 01 D 27/02, B 01 D 27/06**

(21) Application number: **82102859.4**

(22) Date of filing: **03.04.82**

(54) **Polymer filter cartridge of glass fibers coated with fluoroethylene polymer and process for preparing the same.**

(30) Priority: **14.04.81 US 254229**

(43) Date of publication of application:
**20.10.82 Bulletin 82/42**

(45) Publication of the grant of the patent:
**21.10.87 Bulletin 87/43**

(84) Designated Contracting States:
**AT BE CH DE FR GB IT LI NL SE**

(56) References cited:
**EP-A-0 001 407**
**FR-A-2 228 516**
**GB-A-1 031 570**
**GB-A-1 124 735**
**US-A-3 591 010**
**US-A-3 865 919**

(73) Proprietor: **PALL CORPORATION**
**30 Sea Cliff Avenue**
**Glen Cove New York 11753 (US)**

(72) Inventor: **Adiletta, Joseph G.**
**Vernon Lane**
**Thompson Connecticut (US)**

(74) Representative: **Gudel, Diether, Dr. et al**
**Patentanwälte Dr. V. Schmied-Kowarzik Dipl.-**
**Ing. G. Dannenberg Dr. P. Weinhold Dr. D. Gudel**
**Dipl.-Ing. S. Schubert Dr. P. Barz Grosse**
**Eschenheimer Strasse 39**
**D-6000 Frankfurt am Main 1 (DE)**

Courier Press, Leamington Spa, England.

## Description

Polymer manufacture frequently requires the processing of polymer solutions or liquefied polymers, which have to be freed of contaminant material suspended therein by filtration at some stage of the manufacture. Liquid polymers exist only at high temperatures, because of the high softening and liquefaction points of most polymers, of the order of 204°C (400°F) and above, which for most commercial applications need to be in solid form at normal atmospheric temperatures and temperatures up to 38°C (100°F) above normal. In many cases, processing of liquid polymer is impractical and it is necessary to dissolve the polymer in a solvent. Because of the insolubility of the polymer in the ordinary inert commercial solvents, highly corrosive solvents, such as hot concentrated sulfuric acid, have to be used. The combined requirements of withstanding high temperatures, of the order of 260° (500°F) and higher, and attack by highly corrosive fluids, pose a formidable problem in the development of appropriate filter materials.

In most instances, therefore, polymer filters are made of stainless steel, which is capable of withstanding high temperatures and most corrosive attack. However, stainless steel filters have a relatively small surface area, even when in corrugated form, for the collection of the contaminants that are removed, and require frequent replacement or servicing, with a resultant high proportion of down time for the filtration equipment. Moreover, stainless steel filters are quite expensive, and cannot be disposed of after they become loaded with contaminants, but must be cleaned, in order to make their use economical, which of course increases operating labor costs.

Polytetrafluoroethylene has a higher softening point than most polymeric polymers in commercial use, and is inert to corrosive solvents, but is difficult to fabricate in the form of porous filter sheets. Fabrication of porous sintered polytetrafluoroethylene sheet material results in a filter which, like stainless steel, has a relatively low surface area for collection of contaminant material, even when in corrugated form. Furthermore, it is rather difficult to fabricate porous polytetrafluoroethylene sheet having the uniform and relatively large pore size of from ten to fifty microns that is required for polymer filtration.

A fibrous mat is superior to stainless steel sheet as a filter material because it can provide a measure of depth filtration, with a relatively high surface area in depth for collection of contaminant to prevent filter plug up material, collecting the material not only on the surface but also within the pores of the mat. The pores through a stainless steel sheet are too short and too smooth to provide a collection surface of high surface area, and moreover they do not follow a tortuous course, as do the pores through a fibrous mat. Polytetrafluoroethylene cannot however be fabricated in the fine fibers required for small pore size, while other plastic fibrous materials either have a too low softening or melting point, or have too low a corrosion resistance. Glass fibers, for example, have a high melting point, but are readily attacked and dissolved by acids, such as concentrated sulfuric acid.

EP—A—1,407 provides tubular corrugated filter elements comprising at least one layer of filter sheet material formed in a substantial tubular shape and having the outer surface of the end portions of the filter sheet in adjacent relation, and joined together in a side seam seal by way of self-supporting channel strip of thermoplastic resinous material folded over the end edges of the filter layer, so that the end edges thereof are embraced by the channel strip, which is then bonded to the abutting outer surfaces of the filter sheet, thereby linking the edges of the sheet together.

In a preferred embodiment the tubular corrugated filter element comprises two layers of filter sheet material formed in a substantially tubular shape and having the inner surface of the end portions of the outer filter sheet and the outer surface of the end portions of the inner filter sheet in adjacent relation, and joined together in a side seam seal by way of an interposed self-supporting bonding channel strip of thermoplastic resinous material folded over the outer end edges of the inner filter sheet, so that the end edges thereof are embraced by the channel strip, the channel strip being bonded to the abutting surfaces of the inner and outer filter sheets, thereby sealing the edges of the two sheets together in a leak-tight seal, and blocking the escape of unfiltered liquid between the edges of the inner filter sheet of the tubular filter element into or out from the space enclosed by the inner filter sheet and preventing bypassing of unfiltered liquid from the upstream to the downstream sides of the filter sheets.

In all embodiments, the sheet ends of the filter sheet or sheets in the filter element are joined together and embraced by a nonporous bonding strip formed in a channel configuration, blocking the escape of unfiltered liquid between the edges of the filter sheet or sheets of the filter element into or out from the space enclosed by the filter sheet or sheets, effectively preventing bypassing of unfiltered liquid from the upstream to the downstream sides of the filter sheet or sheets. All liquid entering or leaving that space must necessarily pass through all the filter sheets, whether one or several.

Further, since the bonding channel strip in this side seam seal is of thermoplastic resinous material, it can be the same plastic material as the end caps and/or of the filter sheets. This makes it possible to integrate the bonding channel strip material with the end cap and/or filter sheet.

In accordance with the invention, polymer filters are provided in which the filter medium is a fibrous sheet material formed of glass fibers coated with fluoroethylene polymer, such as polytetrafluoroethylene or polytrifluorochloroethylene. The fluoroethylene polymer coating protects the glass fibers against attack by corrosive fluids, while still retaining a high degree of porosity and since both the fluoroethylene polymer and the glass have high softening points, the filter medium is suitable for use at the elevated temperatures required for processing liquid polymers.

However, the fluoroethylene polymer coating on the glass fibers of such filter sheet material when used as the filter medium makes it difficult to form the filter sheet material into filter cartridges having a side seam seal and with the open ends capped by end caps. The fluoroethylene polymer is not thermoplastic, and it is not susceptible of being bonded to end caps or bonding materials or to itself in a side seam seal using the usual adhesives.

Further in accordance with the invention, filter cartridges are provided having a filter medium composed of fibrous filter sheet material comprising glass fibers coated with fluoroethylene polymer, such as polytetrafluoroethylene or polytrifluoroethylene, and formed in a closed configuration, with a side seam, and having the end caps and side seam seal bonded in a leak-tight seal by way of a thermoplastic fluoroethylene polymer. The thermoplastic fluoroethylene polymer adheres to the nonthermoplastic fluoroethylene polymer and also to the end cap material, which can (for example) be stainless steel. In such cartridges, the filter sheet material can be corrugated, for maximum surface area within a limited space.

The invention accordingly provides a tubular filter element comprising at least one layer of filter sheet material being formed in a substantially tubular shape, having end portions of the tube sealed to end caps via a seal of thermoplastic bonding material, thereby sealing the ends of the filter tube in leak-tight seal, and having the outer surfaces of the end portions of the filter sheet in adjacent relation, and joined together in a side seam seal by way of a self-supporting channel strip of thermoplastic bonding material embracing the outer end edges of the filter sheet, the channel strip being bonded to the abutting surfaces of the filter sheet, thereby sealing the edges of the sheet in a leak-tight seal, and blocking the escape of unfiltered liquid between the ends of the filter sheet at the end caps, and between the edges of the filter sheets into or out from the space enclosed by the filter sheet, and preventing by-passing of unfiltered liquid from the upstream to the downstream sides of the filter sheet, characterized in that the end caps are made of nonthermoplastic material, the filter sheet material is comprising glass fibers coated and bonded together by a nonthermoplastic fluoroethylene polymer, the thermoplastic bonding material of both the seal and the channel strip is a thermoplastic fluoroethylene polymer material.

In a preferred embodiment the tubular filter element has ends caps bonded to the ends of the filter tube in a leak-tight seal via a layer of fluoroethylene polymer in a shape corresponding to the shape of the end caps in the portions abutting the ends of the filter tube.

In other preferred embodiments, the bonding channel strip in the side seam seal is of the same thermoplastic fluoroethylene polymer material as the material bonding the ends of the filter tube to the end caps, and the bonding strip material is integrated with the material bonding the end caps forming an integral one-piece bond.

The bonding channel strip in the side seam seal and the material bonding the ends of the filter tube can also be of the same fluoroethylene polymer material as the filter sheet, and the bonding materials are integrated with the filter sheet in the seals, forming an integral one-piece filter element.

Fibrous mat filter media of nonwoven glass fibers even when coated with a fluoroethylene polymer tend to have a low tensile strength, and a low resistance to high differential pressure. In order to increase the differential pressure withstood by the filter cartridges of the invention, the filter sheet material can be supported on a stronger foraminous or porous material, such as stainless steel wire mesh, or a woven glass fiber fabric material, or both, either as a backing or as a separate layer. The glass fibers can be laid down upon the support, and the support thereby embedded within the glass fiber layer. A fluid dispersion of the fluoroethylene polymer can then be applied to the filter sheet, which is thoroughly impregnated therewith, any volatile solvents removed, and the precipitated fluoroethylene polymer then sintered at an elevated temperature, in order to form a more or less continuous coating of the polymer on the fibers, and bond the polymer to the fibers, as well as bonding the fibers to each other at their points of crossing.

The filter cartridge of the invention is illustrated in the drawings, in which:

Figure 1 represents a side view, in elevation, of a corrugated filter cartridge in accordance with the invention;

Figure 2 represents a cross-sectional view, taken along the line 2—2 of the filter cartridge of Figure 1;

Figure 3 represents a cross-sectional view, taken along the line 3—3 of the filter cartridge shown in Figure 2;

Figure 4 represents a section, taken along the line 4—4 of the filter cartridge shown in Figure 1, detailing the side seam seal;

Figure 5 represents a longitudinal section through one end cap, taken along the line 5—5 of Figure 1; and

Figure 6 represents a variation of the side seam seal shown in Figure 4, which is less strong and therefore suitable in filter cartridges intended for use under relatively low differential pressures.

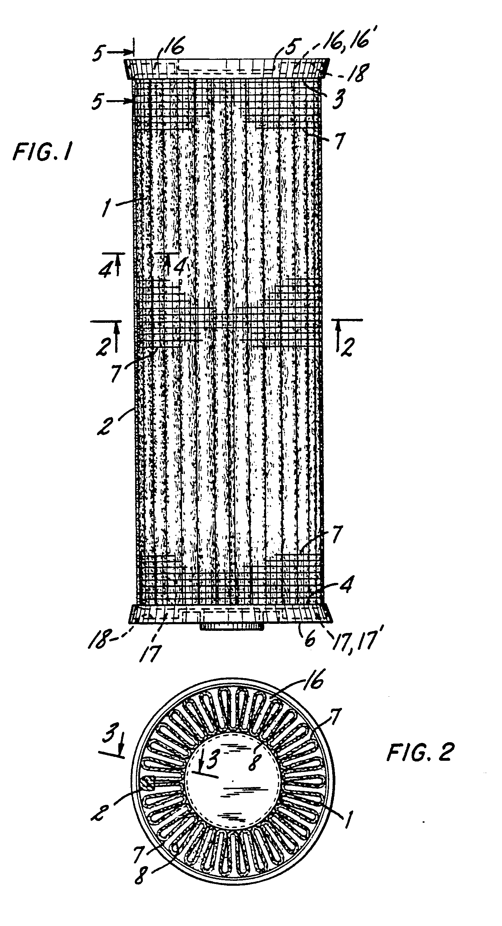

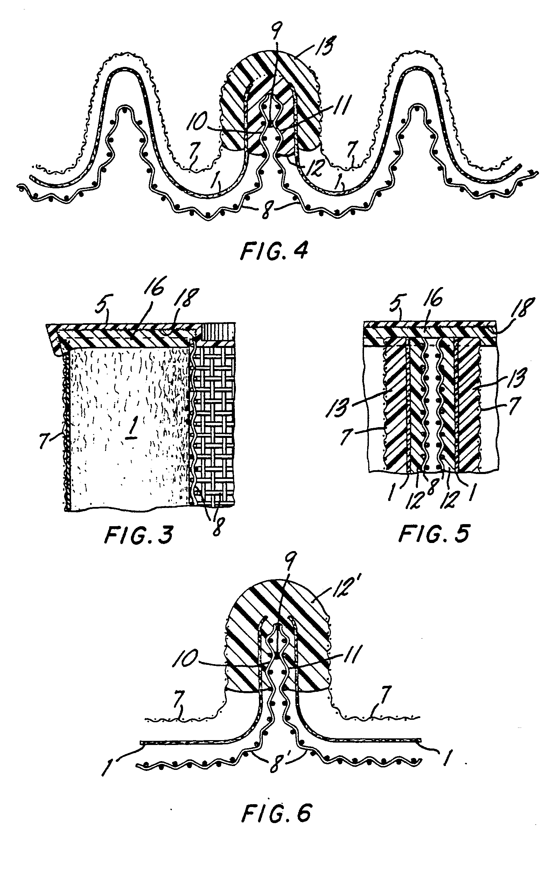

The filter cartridge shown in Figures 1 to 4 has a tubular filter medium 1 formed of sheet material folded into a tubular configuration with the edges lapped together in a side seam seal 2, as shown best in Figure 4, and with the open ends 3, 4 closed off by end caps 5, 6. The filter medium is a mat of glass fibers of diameter ranging from 0.7 to 3.0 µm, laid down on a square weave glass fiber fabric for support, and impregnated with an aqueous polytetrafluoroethylene emulsion. The impregnated sheet is dried, and the polytetrafluoroethylene deposit then sintered at from 343°C to 482°C (650 to 900°F), to bond it to the fibers and the fibers to each other and the glass fiber fabric. The impregnated sheet material is sufficiently flexible to permit corrugation, as shown in the *Figures*. The outer face of the filter medium 1 is protected by a sheath or tube 7 of foraminous drainage material such as Vexar(R), and the inner face of the filter medium is protected by a sheath 8 of stainless steel wire mesh, both of which are placed in position, sandwiching the filter medium therebetween, before corrugation of the resulting composite.

The wire mesh sheath 8 serving as an internal support has a side seam seal 9, best seen in *Figure 4*, in which the juxtaposed lapped edges 10, 11 are bonded together by a series of spot welds spaced along the seam from end to end. A U-shaped channel 12 of fluoroethylene-propylene copolymer is placed over the lapped and welded edges of the wire mesh, on the inside of the filter medium, and a second U-shaped channel 13 of fluoroethylene-propylene copolymer is placed over the lapped ends of the filter medium, with lapped ends of the foraminous drainage material on the outer surface of the outermost U-channel. The composite is then bonded together under a pressure of 1,4 bar (20 psi), by heating at 288°C (550°F) for 30 seconds. Under these conditions the fluoroethylene-propylene copolymer is flowable, resulting in a leak-tight bonded side seam seal, in which the side seam ends of the outer drainage medium, filter medium and inner wire mesh are all embedded in the fluoroethylene polymer, as best seen in *Figure 5*. Since the channel is continuous, this seals off the side seam, which otherwise would be open to the atmosphere.

The end caps 5, 6 are applied and bonded to the ends of the resulting tube with the aid of intermediate disc 16, 17 of fluoroethylene-propylene copolymer. Each disc 16, 17 of fluoroethylene propylene polymer is annular, fitting within each end cap 5, 6, in the spaces 18. The caps are then applied to the end edges of the composite tube of Vexar drainage medium, filter medium and wire mesh internal support. The interiors of the end caps are pre-etched with acid to maximize bond strength.

The fluoroethylene-propylene polymer discs shown are approximately one-eighth inch thick, but obviously any thickness can be used, according to the bonding requirements and the end caps used. The end caps are then bonded to the ends of the filter cylinder by applying to the end caps a pressure of 0,35 bar (5 psi) or higher at a temperature of 304°C (580°F) for 30 seconds, under which conditions the fluoroethylene propylene copolymer softens, and the edges of the drainage medium, filter medium and internal support become embedded in the fluoroethylene propylene copolymer discs, as seen in *Figure 3*.

The construction of the side seam seal shown in *Figure 4* is quite strong, and can withstand high pressure differentials. It need not be so strong, if the differential pressure can be expected to be low. A suitable side seam seal for such conditions is shown in *Figure 6*.

In the structure shown in *Figure 6*, only one U-channel strip 12', this time a drawn film of unsintered polytetrafluoroethylene polymer, is used, and this embraces both the filter medium 1 and the downstream wire mesh drainage medium sheath 8. When the composite is subjected to heat and pressure, as in the structure of *Figure 4*, the U-channel of polytetrafluoroethylene polymer is softened, and is caused to flow into and impregnate both the upstream drainage medium 7, and the filter medium 1 and downstream drainage medium 8, the wire mesh, bonding them together in a leak-tight seal from end to end of the filter cylinder.

The discs 16', 17' are also of unsintered polytetrafluoroethylene film, bonding the end caps 5, 6 to the filter cylinder.

In this structure, the channel material may not fully impregnate the downstream wire mesh layer 8, unlike the structure shown in *Figure 4*, so that the side seam seal may be less strong, but it is nonetheless as leak-tight as the structure of *Figure 4*, because the filter medium 1 is fully sealed across the open seam 2 by the U-channel 12'.

Variations in these structures will be apparent. For example, although usually not necessary, a third channel strip may be imposed over the exterior of the upstream drainage medium. This in the case of the structure shown in *Figure 4* imposes three layers of fluorinated ethylene propylene copolymer material, and in the case of the structure of *Figure 6* imposes two layers of the polytetrafluoroethylene polymer material, at the side seam seal.

The polytetrafluoroethylene or polytrifluorochlorethylene filter medium is known, and described in U.S. patent No. 3,053,762 patented September 11, 1962 to Joseph G. Adiletta. Its preparation is described and shown in the drawings. As seen in *Figure 3* of the patent a continuous strip 10 of woven cloth, for example of glass or mineral fiber, about one mil thick, unwinds from a fixed bolt 12, and is carried over a belt assembly generally designated by the numeral 14. The belt assembly 14 comprises a driving roller 16, actuated by conventional drive means (not shown here) and a driven roller 18. For reasons hereinafter explained, a connecting belt 20 enfolding the two rollers is constructed of a metal or like screen material, so as to admit the free passage of fluids therethrough. Hence the screen belt 20 continuously travels in the direction designated by the arrows carrying the woven cloth strip 10 on the upper surface thereof. This is similar to a Fourdrinier machine.

A headbox or other suitable reservoir 22 contains, for example, a special blend of micro-fiber glass slurry 24, such as would be employed in the manfuacture of glass fiber paper, as described in British patent No. 769,687, which is discharged from the reservoir 22 through a metering orifice 26, and deposited onto the woven cloth strip 10, so that the woven cloth now becomes a substratum for the fibers (*Figures 1 and 2*).

The moving belt screen 20 next carries the woven cloth strip 10 with the fibers 24 deposited thereon over a vacuum box 28, so that cloth and slurry are subjected to the differential pressure created by the vacuum box, and the fibers of the slurry are firmly locked onto the cloth 10. At this point a quantity of fluid is expelled from the slurry by the action of the vacuum box 28. Therefore, the belt 20 is constructed of a screenlike material, to facilitate the passage therethrough of the fluid expelled from the slurry.

The woven cloth strip 12 with the blend of micro fiber glass firmly united thereto is next carried under an open oven or radiant heater 32 for the final drying of the product. This forms a glass fiber paper type product over the woven cloth substratum (*Figures 1 and 2*), which by means of a guide roller 34 may now be rolled onto a take-up roll 36 as one form of the final filter product about two mils thick, for example when a nominal one mil cloth is used with the proper amount of fiber.

Means are now provided for imparting special physical characteristics to the material as may be desired, by bypassing the guide roller 34, onto an alternate guide roller 38. The alternate guide roller 38 is positioned to guide the finished material 30 through an impregnating bath within a reservoir 40. Thence the material is guided through a temperature controlled oven 42 thereby drying the same, and curing or fusing the impregnant thereon.

The finished product is rolled up onto a take-up roll 46, being guided thereon by means of a standard guide roller 44. A feature of this material is controlled pore size up to about one hundred micrometres. The flow rate of a fluid through this material is about ten to forty times that for material comparable in pore size.

As the fluoroethylene polymer, there can be used polytetrafluoroethylene or copolymers of tetrafluoroethylene with other monomers, such as ethylene, chlorotrifluoroethylene, or fluorinated propylenes, such as hexafluoropropylene. These monomers are used only in very small amounts, generally less than 0.2%.

When the fiber glass slurry 24 is metered onto the woven cloth 10, and locked firmly thereto by operation of the vacuum box 28, and the drying oven 32, a glass fiber paper is formed over and interlocked into the woven cloth, and the resultant material will retain the high tensile strength properties of the woven cloth, and yet possess the filtration properties of the glass fiber paper.

It is to be noted that several types and thicknesses of woven cloth may be employed to advantage as a substratum, depending upon the magnitude of the tensile strength desired, and that the pore sizes of the material may be predetermined and controlled by the glass fiber blend slurry used, and by the quantity thereof permitted to be deposited onto the material 10 through the metering orifice 26. In this manner, the filter material may be relatively thin while retaining high tensile strength and durability. In addition, because of the constituents of the material, it may be used at high temperatures.

It will be appreciated that materials of various and special physical and chemical characteristics may be manufactured by immersing the already finished material 30 in the reservoir 40.

In each embodiment of side seam seal, since the bonding U-strip is folded over the outer end edges of the filter sheet, so that the end edges thereof are embraced by the channel strip, the channel strip thereby seals the edges of the filter sheet as well as the drainage medium and internal core together in a leak-tight seal, and blocking the escape of unfiltered liquid between the edges of the filter sheet of the tubular filter element into or out from the space enclosed by the filter sheet and preventing bypassing of unfiltered liquid from the upstream to the downstream sides of the filter sheets.

The side seam seal can be formed before bonding of the filter end caps to the open ends of the cylindrical filter element; since the bonding materials are the same, there is no interference by an end of a bonding agent layer with this seal. Consequently, no potential leakage path can exist at the end cap, due to the bonding agent holding the side seam seal together, since the bonding agent in the points where it contacts the end cap bonding material is integrated with the end cap bonding material, forming one unit.

Application of heat through conventional means causes the thermoplastic channel strip material to often and melt, and enter the pores of the filter sheet or sheets with which it is in contact, and produce a leak-tight bond throughout the contact area.

The use of a self-sustaining channel strip instead of a coating makes it possible to obtain uniform thickness and width of the bonding strip throughout the seal, so that the seal is absolutely uniform in thickness from end to end of the filter cylinder.

The filter cartridges in accordance with the invention are readily prepared from one or more sheets of the fluoroethylene polymer-coated glass fiber filter sheet material by placing the sheets and any drainage medium and core support in close juxtaposition, and corrugating and forming the filter medium in the usual way. The only difference in fact from the usual process of manufacture is in the formation of the side seam seal. *Figures 5 to 8* of U.S. patent No. 4,184,966 patented January 22, 1980, to David B. Pall show the steps in the formation of the side seam seal, the finished filter element being obtained subsequent to application of the end caps.

As seen in *Figures 5 to 8*, the filter element comprises one sheet of the fluoroethylene polymer-coated glass fiber filter sheet material sandwiched between the inner and outer sheaths. The sheet and sheath composite is corrugated in a plurality of corrugations and the ends of the composite are folded over and brought together into a cylinder of the desired length and diameter.

The side seam seal is formed by inserting a T-form support in the last corrugations of the filter sheet material before the ends opening out the ends of the last corrugation, so that the two end portions are parallel. A U-shaped channel strip of fluoroethylene polymer is inserted over the two ends of the filter sheet. The spacing apart of the sides of the channel strip is slightly greater than the thickness of the two abutting end portions of the filter sheet. Accordingly, the outer surfaces of the two end portions of the filter sheet are in juxtaposition to the inner surface of the channel strip. The same is true of the channel strip embracing the wire mesh ends.

It is apparent that the channel strip extends axially from end to end of the filter element.

The filter sheet and wire mesh are now heat bonded to the channel strip, forming a leak-tight seal. The composite seam assembly is placed between the heated jaws or platens of a heat-sealing device of conventional type, and heat and pressure applied to form the side seam seal through the channel strip to the filter layer, bringing the layer into contact under pressure with the fluoroethylene polymer strip, which is now softened by the application of heat through the platens. The pressure applied by the platens forces the molten fluoroethylene polymer material to penetrate the open pores of the filter sheet, forming a liquid-impervious seal, and when the platens are removed and the fluoroethylene polymer again solidifies, a side seam seal is formed with the joined edges of the filter sheet completely closed off by the U-base of the strip.

In this type of side seam seal, the seal itself takes up very little of the surface area of the filter, in fact, only a portion equal to the width of the channel strip, since the strip extends outwardly from the filter surface. Accordingly, the side seam seal offers a minimum of obstruction to flow of fluid from the exterior to the interior of the filter cylinder.

As the channel strip and end cap bonding material any thermoplastic fluoroethylene polymer can be used, such as fluoroethylene-propylene copolymer, or previously unsintered polytetrafluoroethylene film, such as that disclosed in U.S. Patents Nos. 3,953,566, patented April 27, 1976 and 4,187,390 patented February 5, 1980 to Gore, and Japanese patent disclosure No. Showa 42-13560, dated August 1, 1967, to Sumitomo Denki Kogyo K.K.

After completion of the side seal, an internal core is slipped into the open center of the tube, and the end caps are applied, employing the same method. The disc of fluoroethylene polymer, optionally the same material as the bonding strip for the side seam seal, is liquefied. All the edges of one end of the filter material and side seam seal are then embedded in the liquefied face of the end cap, forming a leak-proof seal therewith, and if the plastic material of the side seam seal is the same as the plastic material of the disc of the end cap, an integrated unitary seal structure is formed, upon hardening of the material.

The liquefied fluoroethylene polymer material permeates the pores of the ends of the filter material, and when the liquid plastic material has been hardened, the end cap is bonded to the filter with the side seam seal an integral part of the bond. The procedure can then be repeated in capping the other end of the filter element.

The process of the invention is applicable to forming tubular-filter elements of any configuration. A side-seam seal and end caps appropriate to the configuration of the tubular filter elements are of course employed in each case. Normally, the filter elements are in cylindrical corrugated form, but the process is also applicable to tubular elements in any cross-sectional configuration, including plain, folded, convoluted and corrugated triangular, square, rectangular, elliptical and other polygonal filter tubes. The size and configuration of the convolutions in the case of a corrugated element are not critical. Any plastic or resinous material or any metallic material resistant to corrosive attack and having a softening point above the temperature of use of the polymer filter can be employed for the end caps. Stainless steel and polytetrafluoroethylene are preferred.

The process of the invention is applicable to tubular filter elements made of from one, two, three, four, five or more layers of the filter medium. If the material has insufficient rigidity to be self-supporting, the tube can be made so by incorporation of a central core or support, such as a spring or a supporting tube of rigid metallic or plastic material, for instance, a perforated metal or plastic foraminous core or spring of conventional construction. External sheath supports can also be applied. Any internal and/or external support is normally of a length substantially equal to that of the filter element, so that the support and the edges of the filter element are in a substantially flush fit with the end caps, when they are bonded thereto.

The end caps can be made with appropriate raised or depressed portions and apertures to meet the shape and flow requirements of the ends of the filter support, and the folds are convolutions of the filter tube, and in accordance with the flow requirements and structural requirements of the filter assembly in which the filter element is to be used.

The end caps can be of any desired configuration, appropriate to the requirements of the filter tube and filter assembly. Usually, at least one of the end caps will be provided with an aperture for delivery of filtered fluid from or unfiltered fluid to the interior of the structure. In many instances, both end caps will be apertured, particularly, where a plurality of filter elements are to be connected together to form a long tube.

The bonding channel strip can be of a width overall appropriate to the filter sheet material. A rough-surfaced material will be wider than a smooth material. Usually, a channel strip of from 0.25 to 5 mm in width will be satisfactory.

The bonding channel strip can have any cross-sectional configuration, including not only U-shapes with rounded web forming the sides of the channel but also squared-off channel shapes such as ⊔ and V shapes, and other polygonal shapes.

## Claims

1. A tubular filter element comprising at least one layer of filter sheet material (1) being formed in a substantially tubular shape, having end portions of the tube sealed to end caps (5, 6) via a seal (16, 17) of thermoplastic bonding material, thereby sealing the ends of the filter tube in leak-tight seal, and having the outer surfaces of the end portions of the filter sheet (1) in adjacent relation, and joined together in a side seam seal (2) by way of a self-supporting channel strip (12, 13; 12') of thermoplastic bonding material embracing the outer end edges of the filter sheet (1), the channel strip (12, 13; 12') being bonded to the abutting surfaces of the filter sheet (1), thereby sealing the edges of the sheet (1) in a leak-tight seal, and blocking the escape of unfiltered liquid between the ends of the filter sheet (1) at the end caps (5, 6), and between the edges of the filter sheet (1) into or out from the space enclosed by the filter sheet (1), and preventing bypassing of unfiltered liquid from the upstream to the downstream sides of the filter sheet (1), characterized in that the end caps (5, 6) are made of nonthermoplastic material, the filter sheet (1) material is comprising glass fibers coated and bonded together by a nonthermoplastic fluoroethylene polymer, the thermoplastic bonding material of both the seal (16, 17) and the channel strip (12, 13; 12') is a thermoplastic fluoroethylene polymer material.

2. A tubular filter element according to claim 1 having the end caps (5, 6) bonded to the ends of the filter tube in a leak-tight seal via a layer of fluoroethylene polymer in a shape corresponding to the shape of the end caps (5, 6) in the portions abutting the ends of the filter tube.

3. A tubular filter element according to claim 2 in which the bonding channel strip (12, 13; 12') in the side seam seal (2) is of the same thermoplastic fluoroethylene polymer material as the material bonding the ends of the filter tube to the end caps (5, 6), and the bonding strip material is integrated with the material bonding the end caps (5, 6), forming an integral one-piece bond.

4. A tubular filter element according to claim 2 in which the bonding channel strip (12, 13; 12') in the side seam seal (2) and the material bonding the ends of the filter tube are of the same fluoroethylene polymer material as the filter sheet (1), and the bonding materials are integrated with the filter sheet (1) in the seals (2), forming an integral one-piece filter element.

5. A tubular filter element according to claim 2 wherein the layer of thermoplastic fluoroethylene polymer and the channel strip each impregnate the filter sheet material (1) where they abut the same.

6. A tubular filter element according to claim 2 in which the bonding layer at the end caps (5, 6) and the bonding channel strip (12, 13; 12') each comprise fluoroethylene-propylene copolymer.

7. A tubular filter element according to claim 2 in which the bonding layer at the end caps (5, 6) and the bonding channel strip (12, 13; 12') each comprise polytetrafluoroethylene.

8. A tubular element according to claim 2 in which the fluoroethylene polymer coating on the filter sheet (1) comprises polytetrafluoroethylene.

9. A tubular filter element according to any of claims 1 to 8 in which the layer of filter sheet material (1) is supported between inner and outer foraminous sheaths (7, 8) of supporting sheet material, and having the inner surface of the end portions of the filter sheet (1) and the outer surface of the end portions of the inner sheath (8) in adjacent relation, and joined together in a side seam seal (2) by way of a self-supporting bonding channel strip (12, 13; 12') of thermoplastic fluoroethylene polymer material folded over the joined edges of the filter sheet (1) and inner sheath (8), so that the end edges thereof are embraced by the channel strip (12, 13; 12'), the channel strip being bonded to the abutting surfaces thereby sealing the edges of the two sheets (1, 8) together in a leak-tight seal (2).

10. A tubular filter element according to claim 9 having the inner surface of the end portions of the outer sheath (7) and the outer surface of the end portions of the filter sheet (1) in adjacent relation, and joined together in a side seam seal (2) by way of a second self-supporting bonding channel strip (13) of thermoplastic fluoroethylene polymer material interposed therebetween, so that the outer surfaces of the end edges of the filter sheet (1) are embraced by the channel strip (13), and the inner surfaces of the end edges of the outer sheath (7) abut the outer surface of the channel strip (13), and the first channel strip (12) embraces only the end edges of the inner sheath (8), with the inner surface of the end edges of the filter sheet (1) abutting the outer surface of the second channel strip (13), the two channel strips (12, 13) being bonded to the abutting surfaces thereof, thereby sealing the edges of the inner and outer sheath (7, 8) and filter sheet (1) together in a leak-tight seal (2).

## Patentansprüche

1. Rohrförmiges Filterelement, das zumindest eine Schicht Filterblattmaterial (1) enthält, das im wesentlichen eine rohrförmige Form hat, wobei Endteile des Rohres mit Endkappen (5, 6) mit einer Dichtung aus thermoplastischem Verbundmaterial abgedichtet sind, wodurch die Enden des Filterrohrs in leckdichter Dichtung abgedichtet sind und die äußeren Oberflächen der Endteile des Filterblatts (1) aneinander angrenzen und in einer Seitennahtdichtung (2) durch einen freitragenden Falzstreifen (12, 13; 12′) des thermoplastischen Verbundmaterials miteinander verbunden werden, der die äußeren Endkanten des Filterblattes (1) umgibt und wobei der Falzstreifen (12, 13; 12′) mit den aneinander anliegenden Oberflächen des Filterblatts verklebt ist, wodurch die Kanten des Blattes (1) in einer leckdichten Dichtung abgedichtet werden und der Austritt von ungefilterter Flüssigkeit zwischen den Enden des Filterblattes (1) an den Endkappen (5, 6) und zwischen den Kanten Des Filterblattes (1) hinein oder aus dem Raum, der vom Filterblatt umschlossen wird, blockiert wird und die Ableitung von ungefilterter Flüssigkeit von den stromauf gelegenen zu den stromab gelegenen Seiten des Filterblattes (1) verhindert wird, dadurch gekennzeichnet, daß die Endkappen (5, 6) aus einem nicht thermoplastischem Material hergestellt sind und das Filterblattmaterial (1) Glasfasern enthält, die mit einem nicht thermoplastischen Fluoroäthylenpolymer beschichtet und miteinander verbunden sind und das thermoplastische Verbundmaterial sowohl der Dichtung (16, 17) wie auch des Falzstreifens (12, 13; 12′) ein thermoplastisches Fluoroäthylenpolymermaterial ist.

2. Rohrförmiges Filterelement nach Anspruch 1, dadurch gekennzeichnet, daß die Endkappen (5, 6) mit den Enden des Filterrohrs in einer leckdichten Dichtung verklebt sind, und zwar durch eine Schicht aus Fluoroäthylenpolymer in einer Form entsprechend der Form der Endkappen (5, 6) bei den Teilen, die an den Enden des Filterrohrs anliegen.

3. Rohrförmiges Filterelement nach Anspruch 2, dadurch gekennzeichnet, daß der Falzstreifen (12, 13; 12′) in der Seitennahtdichtung (2) aus dem gleichen thermoplastischen Fluoroäthylenpolymermaterial besteht wie das Material, das die Enden des Filterrohrs mit den Endkappen (5, 6) verklebt und daß der Falzstreifen mit dem Material, das die Endkappen (5, 6) verklebt, integriert ist und einen einstückigen Verbund bildet.

4. Rohrförmiges Filterelement nach Anspruch 2, dadurch gekennzeichnet, daß der Falzstreifen (12, 13; 12′) in der Seitennahtdichtung (2) und das Material, mit dem die Enden des Filterrohrs verklebt werden, aus dem gleichen Fluoroäthylenpolymermaterial besteht wie das Filterblatt (1) und die Verbundmaterialien sind mit dem Filterblatt (1) in den Dichtungen (2) integriert und bilden ein einstückiges Filterelement.

5. Rohrförmiges Filterelement nach Anspruch 2, dadurch gekennzeichnet, daß die Schicht des thermoplastischen Fluoroäthylenpolymers und der Falzstreifen beide das Filterblattmaterial (1) dort imprägnieren, wo sie an ihm anliegen.

6. Rohrförmiges Filterelement nach Anspruch 2, dadurch gekennzeichnet, daß die Verbundschicht an den Endkappen (5, 6) und an dem Falzstreifen (12, 13; 12′) jeweils ein Fluoroäthylenpropylen-Mischpolimerisat enthalten.

7. Rohrförmiges Filterelement nach Anspruch 2, dadurch gekennzeichnet, daß die Verbundschicht an den Endkappen (5, 6) und der verklebende Falzstreifen (12, 13; 12′) jeweils Polytetrafluoroäthylen enthalten.

8. Rohrförmiges Filterelement nach Anspruch 2, dadurch gekennzeichnet, daß die Beschichtung aus Fluoroäthylenpolymer auf dem Filterblatt (1) Polytetrafluoroäthylen enthält.

9. Rohrförmiges Filterelement nach einem der Ansprüche 1—8, dadurch gekennzeichnet, daß die Schicht des Filterblattmaterials (1) zwischen inneren und äußeren Hüllen (7, 8) aus stützendem Blattmaterial gestützt wird, wobei die innere Oberfläche der Endteile des Filterblatts (1) und die äußere Oberfläche der Endteile der inneren Hülle (8) aneinander anliegen und miteinander in einer Seitennahtdichtung (2) durch einen freitragenden verklebenden Falzstreifen (12, 13; 12′) aus thermoplastischem Fluoroäthylenpolymermaterial verbunden werden, der über die verbundenen Kanten des Filterblattes (1) und die innere Hülle (8) gefaltet ist, so daß dessen Endkanten durch den Falzstreifen (12, 13; 12′) umgeben werden und der Falzstreifen mit den aneinander anliegenden Oberflächen verklebt wird, wodurch die Kanten der zwei Blätter (1, 8) zusammen in einer leckdichten Dichtung abgedichtet werden.

10. Rohrförmiges Filterelement nach Anspruch 9, dadurch gekennzeichnet, daß die innere Oberfläche der Endteile der äußeren Hülle (7) und die äußere Oberfläche der Endteile des Filterblattes (1) aneinander anliegen und in einer Seitennahtdichtung (2) durch einen zweiten freitragenden verklebenden Falzstreifen (13) aus thermoplastischem Fluoroäthylenpolymermaterial verbunden werden, der dazwischen geschoben ist, so daß die äußere Oberfläche der Endkanten des Filterblattes (1) durch den Falzstreifen umgeben werden und die innern Oberflächen der Endkanten der äußeren Hülle (7) an der äußeren Oberfläche des Falzstreifens (13) anliegen und der erste Falzstreifen (12) nur die Endkanten der inneren Hülle (8) umgibt, wobei die innere Oberfläche der Endkanten des Filterblattes (1) an der äußeren Oberfläche des zweiten Falzstreifens (13) anliegt und die zwei Falzstreifen (12, 13) mit deren anliegenden Oberflächen verbunden sind, wodurch die Kanten der inneren und äußeren Hülle (7, 8) und das Filterblatt (1) zusammen in einer leckdichten Dichtung (2) abgedichtet werden.

## Revendications

1. Elément filtrant tubulaire comprenant au moins une couche de matériau filtrant en feuille (1), mise sous une forme sensiblement tubulaire, avec les portions d'extrémités axiales du tube fixées à des embouts (5, 6) par l'intermédiaire d'un joint (16, 17) d'une matière de liaison thermoplastique, de manière à sceller les extrémités du tube filtrant par un joint étanche aux fuites, et avec les surfaces extérieures des portions d'extrémités latérales de la feuille filtrante (1) disposées contiguës et réunies dans un cordon formant un joint latéral (2), au moyen d'une bande autoportante en U (12, 13; 12') de matière de liaison thermoplastique, recouvrant les bords latéraux de la feuille filtrante (1), la bande en U (12, 13; 12') étant liée aux surfaces contiguës de la feuille filtrante (1), de manière à sceller les bords latéraux de la feuille (1) en un joint étanche aux fuites et à empêcher l'échappement de liquide non filtré entre les extrémités axiales de la feuille filtrante (1) et les embouts (5, 6) et entre les bords latéraux de la feuille filtrante (1), vers l'intérieur ou l'extérieur de l'espace enfermé par la feuille filtrante (1), et à éviter le passage en dérivation de liquide non filtré du côté amont au côté aval de la feuille filtrante (1), caractérisé en ce que les embouts (5, 6) sont faits d'une matière non thermoplastique, le matériau de la feuille filtrante (1) est constitué de fibres de verre revêtues et liées ensemble par un polymère de fluoroéthylène non thermoplastique, et la matière de liaison thermoplastique du joint (16, 17) et de la bande en U (12, 13; 12') est un polymère de fluoroéthylène thermoplastique.

2. Elément filtrant tubulaire selon la revendication 1, avec des embouts (5, 6) fixés aux extrémités du tube filtrant par un joint étanche aux fuites par l'intermédiaire d'une couche de polymère de fluoroéthylène dont une forme correspond à la forme des embouts (5, 6) dans leurs parties appliquées contre les extrémités du tube filtrant.

3. Elément filtrant tubulaire selon la revendication 2, dans lequel la bande de liaison en U (12, 13; 12') dans le cordon formant joint latéral (2) est faite du même polymère thermoplastique de fluoroéthylène que la matière reliant les extrémités du tube filtrant aux embouts (5, 6), et la matière de la bande de liaison est d'un seul tenant avec la matière reliant les embouts (5, 6), de sorte que ces matières forment une liaison intégrale en une pièce.

4. Elément filtrant tubulaire selon la revendication 2, dans lequel la bande de liaison en U (12, 13; 12') dans le cordon formant joint latéral (2) et la matière de liaison aux extrémités du tube filtrant sont faites du même polymère de fluoroéthylène que la feuille filtrante (1), et les matières de liaison sont d'un seul tenant avec la feuille filtrante (1) dans les joints (2), de sorte qu'elles forment un élément filtrant intégral en une pièce.

5. Elément filtrant tubulaire selon la revendication 2, dans lequel la couche de polymère thermoplastique de fluoroéthylène et la bande en U imprègnent chacune la matière de la feuille filtrante (1) là où elles sont en contact avec celle-ci.

6. Elément filtrant tubulaire selon la revendication 2, dans lequel la couche de liaison aux embouts (5, 6) et la bande de liaison en U (12, 13; 12') sont formées chacune par un copolymère fluoroéthylène-propylène.

7. Elément filtrant tubulaire selon la revendication 2, dans lequel la couche de liaison aux embouts (5, 6) et la bande de liaison en U (12, 13; 12') sont chacune en polytétrafluoroéthylène.

8. Elément tubulaire selon la revendication 2, dans lequel le revêtement de polymère de fluoroéthylène sur la feuille filtrante (1) est du polytétrafluoroéthylène.

9. Elément filtrant tubulaire selon l'une quelconque des revendications 1 à 8, dans lequel la couche de matériau filtrant en feuille (1) est supportée entre des gaines perforées intérieure et extérieure (7, 8) de matériau de support en feuille et la surface intérieure des portions d'extrémités latérales de la feuille filtrante (1) et la surface extérieure des portions d'extrémités latérales de la gaine intérieure (8) sont contiguës et réunies en un cordon formant joint latéral (2) au moyen d'une bande de liaison en U autoportante (12, 13; 12') d'un polymère thermoplastique de fluoroéthylène, repliée par-dessus les bords réunis de la feuille filtrante (1) et de la gaine intérieure (8), de sorte que leurs bords latéraux sont recouverts par la bande en U (12, 13; 12'), la bande en U étant liée aux surfaces appliquées l'une contre l'autre de manière à sceller les bords des deux feuilles (1, 8) ensemble en un joint (2) étanche aux fuites.

10. Elément filtrant tubulaire selon la revendication 9, dans lequel la surface intérieure des portions d'extrémités latérales de la gaine extérieure (7) et la surface extérieure des portions d'extrémités latérales de la feuille filtrante (1) sont contiguës et réunies en un cordon formant joint latéral (2) au moyen d'une seconde bande de liaison en U autoportante (13), faite d'un polymère thermoplastique de fluoroéthylène et intercalée entre elles, de sorte que les surfaces extérieures des bords latéraux de la feuille filtrante (1) sont recouvertes par la bande en U (3) et les surfaces intérieures des bords latéraux de la gaine extérieure (7) s'appliquent contre la surface extérieure de la seconde bande en U (13), et la première bande en U (12) recouvre seulement les bores latéraux de la gaine intérieur (8), la surface intérieure des bords latéraux de la feuille filtrante (1) s'appliquant contre la surface extérieure de la seconde bande en U (13), les deux bandes en U (12, 13) étant liées à leurs surfaces contiguës, de manière à sceller ensemble les bords des gaines intérieure et extérieure (7, 8) et de la feuille filtrante (1) en un joint (2) étanche aux fuites.

FIG. 1

FIG. 2

FIG. 4

FIG. 3

FIG. 5

FIG. 6

2